Europäisches Patentamt

European Patent Office

Office européen des brevets

(19)

(11) **EP 0 677 174 B1**

(12) **EUROPÄISCHE PATENTSCHRIFT**

(45) Veröffentlichungstag und Bekanntmachung des Hinweises auf die Patenterteilung:
**27.11.2002 Patentblatt 2002/48**

(21) Anmeldenummer: **94929451.6**

(22) Anmeldetag: **18.10.1994**

(51) Int Cl.$^7$: **G02B 6/28**, H01P 1/16, H04B 10/00

(86) Internationale Anmeldenummer:
**PCT/CH94/00207**

(87) Internationale Veröffentlichungsnummer:
**WO 95/012828 (11.05.1995 Gazette 1995/20)**

(54) **VERFAHREN ZUR ÄNDERUNG DER INTENSITÄTS- UND PHASEN-VERHÄLTNISSE IN MULTI-MODE INTERFERENZ KOPPLERN**

PROCESS FOR ALTERING THE INTENSITY AND PHASE RATIOS IN MULTI-MODE INTERFERENCE COUPLERS

PROCEDE DE MODIFICATION DES RAPPORTS D'INTENSITE ET DE PHASE DANS DES COUPLEURS MULTIMODES A INTERFERENCES

(84) Benannte Vertragsstaaten:
**DE FR GB IT SE**

(30) Priorität: **04.11.1993 CH 331093**

(43) Veröffentlichungstag der Anmeldung:
**18.10.1995 Patentblatt 1995/42**

(73) Patentinhaber: **Koninklijke Philips Electronics N.V.**
**5621 BA Eindhoven (NL)**

(72) Erfinder: **Besse, Pierre-André**
**1020 Renens (CH)**

(74) Vertreter: **Visser, Derk**
**INTERNATIONAAL OCTROOIBUREAU B.V.,**
**Prof. Holstlaan 6**
**5656 AA Eindhoven (NL)**

(56) Entgegenhaltungen:
**WO-A-92/11550          US-A- 4 087 159**

• **ECOC94,20TH CONFERENCE ON OPTICAL COMMUNICATION, 25. September 1994, FIRENZE,ITALY Seiten 669 - 672 P.A.BESSE ET.AL. 'New 1x2 multi-mode interference couplers with free selection of power splitting ratios'**

**Beschreibung**

In der Optik, (d.h. in der konventionellen, der dreidimensionalen Optik, der planaren und der Wellenleiteroptik), werden Lichtstrahlen verarbeitet. Wichtige Funktionen sind dabei die Teilung und Mischung von Lichtstrahlen. In der konventionellen Optik verwendet man dazu Prismen oder Membranteiler. Heute wird versucht, die Dimensionen der optischen Komponenten sehr stark zu reduzieren. Auf der einen Seite wird in drei Dimensionen versucht, die Verarbeitung der Lichtstrahlen mittels Interferenzerscheinungen (Holographie...) zu realisieren (Free space optics). Anderseits entwickelt sich die integrierte Optik sehr rasch. Dabei werden dünne Filmschichten oder zweidimensional geführte Wellenleiter verwendet. Ein Ziel der integrierten Optik ist die Funktionalität der Komponenten der konventionellen Optik durch neue integrierbare optische Elemente zu realisieren. Dieses Forschungsgebiet hat wichtige Anwendungen in der Kommunikationstechnik gefunden.

In der faseroptischen Kommunikation erfolgt die Datenübertragung mit optischen Signalen durch Glasfasern . Die Verarbeitung der optischen Signale erfolgt auf integrierten optischen Chips, die zwischen den Fasern plaziert werden. Zur Herstellung dieser Chips werden meist dünne Filmschichten auf einen Träger (Substrate wie z.B. Glas, Si, InP, GaAs...) auf gebracht und anschließend strukturiert.

In optischen Wellenleitern [1] wird das Licht in einem Medium (der sogenannte Wellenleiterkern) geführt. Die Führung kommt daher zustande, dass der Wellenleiterkern durch einen reflektierenden Uebergang begrenzt ist. Bei Hohlraumwellenleitern wird ein Metall dazu verwendet. In dielektrischen Wellenleitern wird die totale Reflektion an ein umgebendes Medium mit kleinerem Brechungsindex (dem Wellenleitermantel) verwendet. In optischen Wellenleitern können nur jene Moden propagieren, welche die Maxwellgleichungen erfüllen. Die Wellenleiter sind cut-off, monomode oder multimode genannt, je nachdem ob sie keinen, nur einen Mode jeder Polarisation oder mehrere Moden führen können.

Im Wellenleiter propagiert das Licht in longitudinaler Richtung (z - Richtung). Die x - Richtung ist parallel zur Wellenleiterschicht und wird als horizontale - oder laterale Richtung definiert. Analog ist die y - Richtung senkrecht zur Wellenleiterschicht und ist als vertikale - oder transversale Richtung definiert. Die Berechnung der Lichtfortpflanzung auf den Chips erfolgt durch numerische Methoden wie Beam Propagation (BPM)-Methoden [2] oder Moden-Analyse (MA)-Methoden [3]. In einigen Fällen werden auch analytische Berechnungen wie die Effektive-Index-Methode (EIM) [4] gebraucht. Oft werden die Maxwellgleichungen in skalarer Näherung gelöst. Diese beschreiben die planare Optik exakt [I], Dabei wird zwischen zwei Polarisationen unterschieden: die TE-Polarisation hat den E-Vektor in x-Richtung, und die TM-Polarization hat den H-Vektor in x-Richtung. Für die meist gebrauchten zweidimensional geführten dielektrischen Wellenleiter der integrierten Optik, führt die skalare Näherung zu "quasi-TE" und "quasi-TM" Moden. In solchen Wellenleitern können die Modeformen und die "effektiven" Indexe polarisationabhängig sein. In vielen Fällen ist es hoch erwünscht, aber sehr schwierig, polarisationsunabhängige Komponenten zu produzieren. Es ist zu bemerken, dass sogenannte "monomode' Wellenleiter oft eine Mode jeder Polarisation enthalten, d.h. insgesamt werden oft zwei Moden in "monomode" Wellenleiter geführt. Diese sind in normalen Glasfasern entartete Moden.

Wichtige Bauelemente der integrierten Optik sind die Strahlteiler (engl. splitters) und Mischer (engl. combiners). Man spricht allgemein von $\bar{N}$xN-Teiler. Mit $\bar{N}$ und N ist die Zahl der Eingänge und Ausgänge gemeint. Diese Teiler sollten im Idealfall folgende Eigenschaften zeigen: sie sollten kompakt (von kleiner Dimensionen), polarisationsunabhängig, wenig empfindlich zu Fabrikationsungenauigkeiten und einfach zu produzieren sein. Ferner, die Teilungs- oder Mischverhältnisse sollten einfach durch geometrische Aenderungen im Design an die verschiedenen Anwendungen angepasst werden können. Verschiedene Strahlteiler und Mischer wurden schon realisiert:

- Symmetrische Y-Verzweigungen [5] sind einfache Lösungen für 1x2 Teiler mit einem 50%/50% Intensitätsverhältnis. Asymmetrische Y-Verzweigungen [6] liefern andere Intensitätsverhältnisse, sind aber wegen Kopplungseffekten zwischen den beiden Ausgängen oft polarizationsabhängig. Für die Herstellung von Y-Verzweigungen ist aber eine hohe Auflösung, besonders im spitzigen Spalt, erforderlich. Sie sind sehr empfindlich zu den Fabrikationsungenauigkeiten.

- Richtungskoppler [1] mit zwei parallelen Wellenleitern, getrennt mit einem schmalen Spalt, wirken als 2x2-Teiler. Die Kopplungslänge ist aber sehr empfindlich zu Herstellungsparameter speziell zur Spaltbreite und Tiefe. Die Kopplungslänge ist auch stark polarisationsabhängig [7]. "Two Mode" Interferenz (TMI)-Koppler [8] ohne Spalt wirken auch als 2x2-Teiler. Das Intensitätverhältnis hängt aber stark von der Kopplung in den Ein- und Ausgang Y-Verzweigungen ab. Sie sind deshalb auch sehr empfindlich gegenüber den Herstellungbedingungen.

- Integrierte Totalreflektionsspiegel [9] sind eine sehr kompakte Lösung für 1x2-Teiler. Sie erfordern aber extreme Anforderungen an die Herstellungstechnik. Ferner ist das Teilungsverhältnis nur schwer kontrollierbar und stark von der Genauigkeit der geometrischen Dimensionen abhängig.

- In "free-space"- Star-Kopplern [10] werden die $\bar{N}$ Eingänge durch Diffraktion in einer nicht geführte Sektion gleichmässig auf die N Ausgänge verteilt. Solche Elemente sind gut geeignet für grosse Werte von $\bar{N}$ und N. Sie sind aber kaum geeignet für ein 1x2, 2x2 oder 1x3 Teiler, da dann die Homogenität der Intensitätsverteilung immer schwieriger zu realisieren wird.

- In den letzten Jahren sind Multi-Mode Interferenz (MMI)-Koppler [11] [12] [3] stark im Kommen. Diese Bauteile sind Wellenleitersektionen, die mehrere Moden führen. Diese werden zum Beispiel produziert, indem eine gewöhnliche Wellenleiter-Struktur verbreitert wird, bis sie genügend Moden führt. Manchmal wird dabei zum Beispiel auch die laterale Führung erhöht. Dank ihrer Selbstabbildungseigenschaft wirken diese Koppler als $\bar{N}$ xN-Teiler in zwei [12] oder in drei [11] Dimensionen. Wir nennen "gewöhnliche" MMI-Koppler die Elemente mit parallelen Flanken [3]. Zu bemerken ist, dass MMI-Koppler auch mit schrägen Flanken gemacht werden können[12]. Da die Erfindung sich gerade mit diesem Punkt befasst, ist es hier notwendig, die Eigenschaften der "gewöhnlichen" MMI-Koppler näher zu diskutieren.

Diskussion den MMI-Koppler:

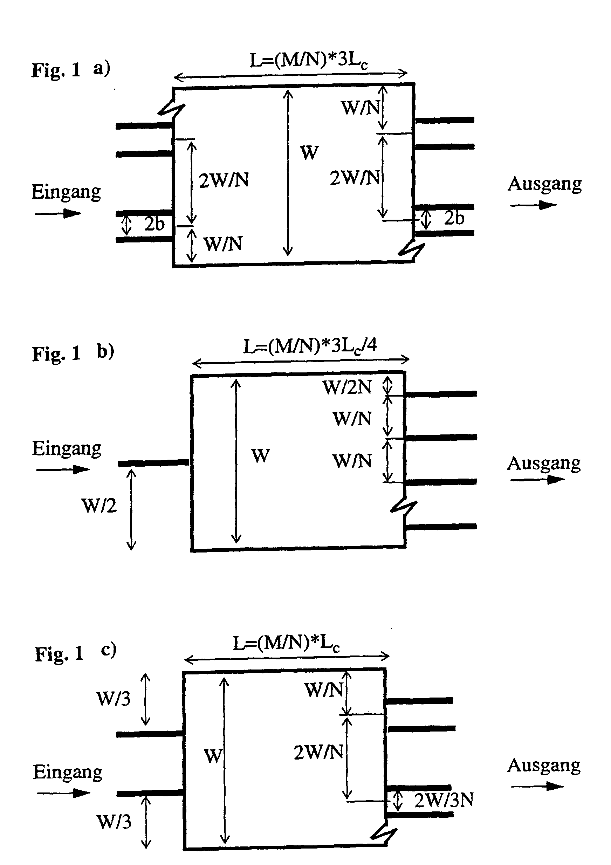

Die allgemeine Form eines MMI-Kopplers mit parallelen Flanken ist in Fig. 1a gezeigt [3] [13]. Die gewöhnlichen "vollständige Interferenz NxN-MMI-Koppler" sind charakterisiert durch eine Bauteillänge L gegeben durch:

$$L = \left(\frac{M}{N}\right) \cdot \left(\frac{3}{A}\right) \cdot L_c \equiv \left(\frac{M}{N}\right) \cdot \left(\frac{3}{A}\right) \cdot \frac{\pi}{(\beta_0 - \beta_1)} \cong \left(\frac{M}{N}\right) \cdot \left(\frac{3}{A}\right) \cdot \left(\frac{4}{3}n\frac{W^2}{\lambda}\right) \qquad \text{(Eq. 1)}$$

Mit A=1 für diese Sorte von Koppler. Dabei sind $\beta_0$ und $\beta_1$ die Propagationskonstanten der ersten zwei Moden des MMI-Kopplers. W ist die Breite des MMI-Kopplers und n ist der Index in der MMI-Sektion. $\lambda$ ist die Wellenlänge im Vakuum. N ist die Anzahl Bilder d.h. auch die Anzahl Ein- und Ausgänge. M ist eine ganze Zahl. N und M sind teilerfremd. Die Bilder haben alle dieselbe Intensität. Der Parameter b ist frei wählbar. Da die rationalen Zahlen (M/N) in den reellen Zahlen dicht sind, kann jede Länge L in beliebig guter Näherung als eine Länge, wo Selbstabbildung erscheint, dargestellt werden. Dabei können aber die Bilder sich überlappen und das gesammte Bildmuster am Ausgang ist dann die kohärente Summe aller dieser Bilder.

Falls der Parameter b gleich 0 oder W/N ist, werden die Selbstabbildungen sich paarweise kohärent überlappen. Das führt zu einer Reduktion der Anzahl Bilder und zu ungleichmässigen Intensitätsverhältnissen an den verschiedenen Ausgängen. In diesem Fall hat man einen gewöhnlichen "überlappende Interferenz" MMI-Koppler. Diese können ungleichmässige Intensitätverhältnisse haben, aber die sind nicht kontrollierbar. Die Verhältnisse sind fest definiert für jede Sorte dieser Elemente.

Zwei Spezialfälle von gewöhnlichen "überlappende Interferenz" MMI-Koppler sind in der Literatur besonders studiert worden. In beiden Fällen liefert die Ueberlappung der Bilder verschwindende Bilderpaare (destruktive Ueberlappung) und Bilderpaare mit derselben Intensität. Damit erhält man für die verbleibenden Bilder eine gleichmässige Intensität. In den gewöhnlichen "symmetrische Interferenz" 1xN MMI-Kopplern (Fig. 1b) werden nur symmetrische Moden angeregt [13] [14]. Die Länge ist L=(M/N)*(3L$_c$/4), wobei L$_c$ in Eq. 1 definiert ist. Der Wert von A ist A=4 für diese Sorte von Kopplern. Symmetrische Moden sollen am Eingang verwendet werden.
In den gewöhnlichen "unvollständige Interferenz" 2xN MMI-Kopplern werden die Moden 2,5,8 ... nicht angeregt [3] [13]. Das wird erreicht, indem die zwei Eingänge an W/3 und 2W/3 plaziert werden (Fig. 1c). Die Länge ist jetzt L=(M/N)*L$_c$. Die Eingangsmoden sind symmetrisch und N ist gerade. A hat den Wert A=3 für diese Sorte von Koppler.

Man kann dieselbe Diskussion auch für die "schrägen Flanken" MMI-Koppler [12] durchführen. Diese sind multi-Mode Wellenleitersektionen, bei denen die Flanken nicht parallel sind, sondern auf radialen Linien liegen. In der multi-mode Sektion wird die Breite linear verkleinert oder vergrössert. Das Bauteil kann in radialen oder zylindrischen Koordinaten (mit Radius r und Winkel $\alpha$) beschrieben werden. In den neuen Koordinaten propagiert das Licht in radialer Richtung und die Flanken des MMI-Kopplers sind durch konstante Winkelkoordinaten definiert. Im neuen Koordinatensystem ist der MMI-Koppler mit "schrägen Flanken" durch ähnliche Gleichungen wie der gewöhnliche MMI-Koppler mit parallelen Flanken beschrieben. Dasselbe kann auch durch konforme Abbildung erhalten werden [15]. Folgendes ist zu bemerken: erstens, die Ein- und Ausgänge liegen bei den "schrägen Flanken" MMI-Kopplern auf Kreisbogen (Linien mit konstantem Radius) anstatt auf geraden Linien. Zweitens, die Länge L ist jetzt:

$$L \cong |R_1 - R_0| = \left(\frac{M}{N}\right) \cdot \left(\frac{3}{A}\right) \cdot \left[\frac{4}{3}n\frac{(R_0\Delta\alpha) \cdot (R_1\Delta\alpha)}{\lambda}\right] \qquad \textbf{(Eq. 2)}$$

Wobei $R_0$, $R_1$ die radialen Koordinaten der Ein- und Ausgangskreisbogen sind. Der Winkel $\Delta\alpha$ ist der Winkel zwischen den "schrägen Flanken". Die Werte $(R_0.\Delta\alpha)$ und $(R_1.\Delta\alpha)$ können als "Ein- und Ausgangsbreiten" interpretiert werden. In Eq.1 ist die Breite W durch den geometrischen Mittelwert der "Ein-und Ausgangsbreiten" zu ersetzen. Der Parameter A ist wie für parallele Flanken definiert.

Die MMI-Koppler können auch in drei Dimensionen realisiert werden [11]. Die Beschreibung verläuft wie oben, nur soll man nicht nur eine Breite sondern eine Breite (in x-Richtung) und eine Dicke (in y-Richtung) berücksichtigen. Durch Selbstabbildungseffekt wird ein zweidimensionales Array von Eingängen auf ein zweidimensionales Array von Ausgängen abgebildet. Die dreidimensionalen MMI-Koppler mit schrägen Flanken können durch Kugelkoordinaten Transformation auf den Fall von dreidimensionalen MMI-Koppler mit parallelen Flanken reduziert werden. Die Ein- und Ausgänge sind dann auf Kugelflächen.

Die MMI-Koppler haben grosse Vorteile. Sie sind (sowohl in der "gewöhnlichen" als auch in der "schrägen" Flanken" Ausführung in zwei oder drei Dimensionen) kompakt [16] [17], sehr gut polarisationsunabhängig (wegen der starken lateralen Modeführung), eher unempfindlich gegenüber Fabrikationsungenauigkeiten [18] und einfach zu produzieren. Sie sind auch speziell gut geeignet als $\bar{N}$ xN-Teiler für kleine Werte von $\bar{N}$ und N. Ihr Nachteil ist, dass sowohl in der "gewöhnlichen" als auch in der "schrägen Flanken" Ausführung , die Intensitätsverteilung und die Phasenverteilung an den verschiedenen Ausgängen nicht geändert werden kann. Die Erfindung befasst sich gerade mit diesem Punkt.

Es ist Aufgaben der Erfindung:

Die Intensitäts- und Phasenverhältnisse an den Ausgängen der MMI-Koppler in zwei oder drei Dimensionen kontrolliert zu verändern. Durch Aenderungen von geometrischen Parametern werden diese Verhältnisse kontinuierlich variiert. Besonders interessant sind die 1x2-kontinuierlich variierbaren Teiler und die 1x3-Teiler mit zwei gleichen Ausgängen und einem kontinuierlich variierbaren Ausgang. Dafür werden neue Geometrien für den MMI-Koppler entwickelt.

Die Aufgabe wird, gemäß der Erfindung, mit dem in Anspruch 1 definierten Multimode-Interferenz-Koppler und dem in Anspruch 11 definierten Verfahren gelöst. Die neuen Geometrien für die neuen MMI-Koppler in zwei oder drei Dimensionen mit variierbaren Intensitäts- und Phasenverhältnissen entstehen allgemein duch folgende Modifikationen an den gewöhnlichen MMI-Kopplern mit parallelen lateralen Flanken:

- Der gewöhnliche MMI-Koppler wird in zwei oder mehrere Stücke längs die Propagationsrichtung geteilt, so dass jedes Stück selber ein MMI-Koppler (mit eventuell sich überlappenden Bildern) ist.
- Jedes Stück wird separat transformiert, so dass der charakteristische Selbstabbildungseffekt dieser Koppler erhalten bleibt oder in erster Näherung erhalten bleibt. Besonders geeignet als zwei oder drei dimensionale Transformationen sind: Breite und Längenänderungen, Schiefstellen den lateralen Flanken, laterale Verschiebungen und Schiefstellen der Eingangs- und Ausgangswellenleitern, Aenderung der Dimensionen der Ein- und Ausgänge ...
- Die transformierten Stücke werden direkt ,ohne die Verwendung von Verbindungswellenleitern zwischen den Stükken, in Serie gesetzt. Weil jedes Stück transformiert worden ist, sind die Anzahl Bilder und ihre relativen Phasen am Eingang des nächsten Stücks geändert worden. Dadurch wird die Interferenzerscheinung am Ende des gesammten Elements geändert. Je nach verwendeten Transformationen der einzelnen Stücke, ändert sich die Intensitätsverhältnisse an den existierenden Ausgängen, erscheinen neue Selbstabbildungen und treten bewusst erzeugte Radiationen auf.
- Neue Ausgangswellenleiter werden eingeführt, um neu erscheinende Selbstbildern zu führen oder bewusst erzeugte Radiationen zu sammeln.

Um nur die Phasenverhältnisse an den Ausgängen von Multi-Mode Interferenz (MMI)-Koppler in zwei oder drei Dimensionen zu verändern, kann man auf die erste und dritte Etappe verzichten. Das neue Verfahren für Aenderungen an Phasenverhältnissen folgt folgenden Schritten :

- Der gewöhnliche MMI-Koppler wird transformiert, so dass der charakteristische Selbstabbildungseffekt dieser Koppler erhalten bleibt. Nach der Transformation sollen Eingangs- und Ausgangspositionen auf gekrümmten Linien oder gekrümmten Flächen liegen. Diese Linien oder Flächen werden als Eingangsund Ausgangsfronten bezeichnet. Besonders geeignet als zwei- oder dreidimensionale Transformationen sind: Breite- und Längenänderungen, Schiefstellen der lateralen Flanken, laterale Verschiebungen und Schiefstellen der Eingangsund Ausgangswellenleiter, Aenderung der Dimensionen der Ein- und Ausgänge...
- Die Eingangs- und Ausgangswellenleiter werden auf andere Linien oder Flächen als die Eingangs- und Ausgangsfronten, zum Beispiel auf gerade Linien oder auf Ebenen, positioniert.

Dieses Verfahren funktioniert so: Je nach Wahl der Transformation verschieben sich die Eingangs- und Ausgangsfronten, und ihre Krümmungen ändern sich gleichzeitig. Die Unterschiede zwischen den Positionen der Ein- und Ausgänge und der Lage der Eingangs- und Ausgangsfronten erzeugen Aenderungen der Phasenverhältnisse am Ende der Komponente. Diese Verhältnisse können deshalb durch die geeignete Wahl der Transformation kontrolliert werden.

Von diesen zwei allgemeinen Verfahren sind zum Beispiel folgende spezielle Verfahren von grossem Interesse:

Im ersten speziellen Verfahren wird ein Teil der Eingangslichtintensität abgezweigt, ohne die Teilerfunktion des MMI-Kopplers zu zerstören. Dieses Verfahren folgt folgenden Schritten:

- Der gewöhnliche MMI-Koppler wird in zwei Stücke geteilt (Teilung am Ort $z=z_0$). Durch die Wahl von $z_0$, wird der prozentuelle Anteil des abgezweigten Lichtes kontrolliert.
- Das erste MMI-Stück wird auf einer oder auf beiden Seiten verbreitert, dadurch wird ein Teil des Lichts nicht ins zweite MMI-Stück gelangen und als Radiationen auf einer oder auf beiden Seiten auftreten. Diese bewusst erzeugten Radiationen werden durch neu eingeführte Wellenleiter gesammelt.
- Der Rest des Lichts propagiert ins zweite MMI-Stück und interferiert am Ausgang dieses Stücks. Die Störung des Interferenzbildes durch die Verbreiterung des ersten MMI-Stücks wird durch leichte Korrekturen an den Positionen, den Breiten und den Einfallswinkeln den Ein- und Ausgangswellenleitern, sowie an der Länge des zweiten MMI-Stücks, kompensiert.

Das zweite spezielle Verfahren folgt dem ersten allgemeinen Verfahren (Anspruch 1) und ist dadurch gekennzeichnet, dass das Schiefstellen der lateralen Flanken (und die damit gekoppelte Anpassung der Längen und der Ein- und Ausgangswellenleiter Positionen und Richtungen) als zwei- oder dreidimensionale Transformation verwendet wird. Diese Transformationen und die nötigen Anpassungen können einfach durch Koordinatentransformationen (Zylindrischen oder Kugeltransformationen) analysiert werden. Nach den Transformationen sind die Eingangs- und Ausgangsfronten jedes Stückes auf Kreisoder Kugelflächen. Wegen der Nichtübereinstimmung dieser Fronten entstehen Phasenverschiebungen zwischen den MMI-Stücken (dieser Effekt wird anhand vom nächsten, dritten speziellen Verfahren illustriert). Dadurch ändert sich das Interferenzbild und die Intensitätsverhältnisse am Ausgang des ganzen Bauteils.

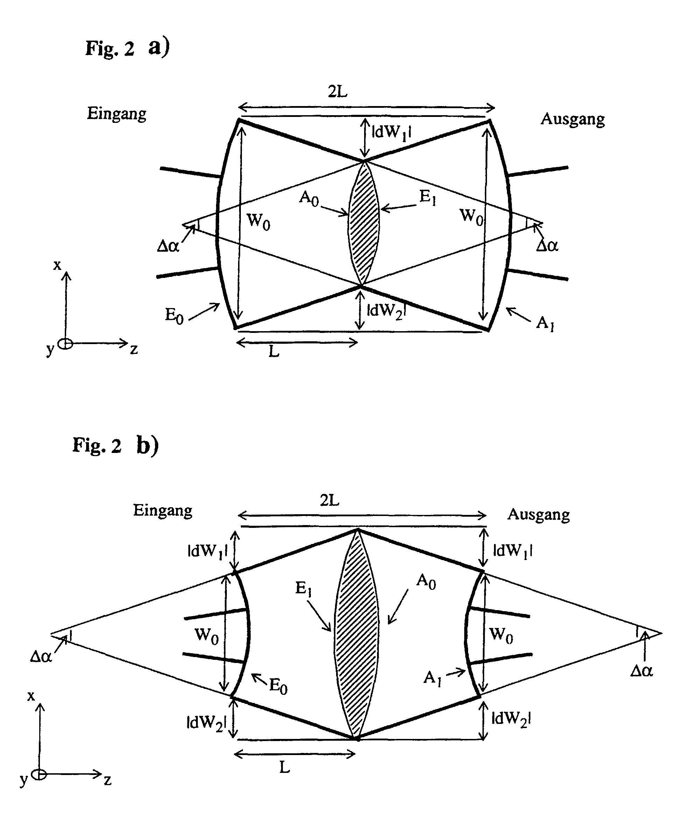

Das dritte spezielle Verfahren ist eine Variation vom zweiten speziellen Verfahren und ist dadurch gekennzeichnet, dass der gewöhnliche MMI-Koppler nur in der Mitte geteilt wird (Fig.2). Bis in die Mitte wird die Breite linear verkleinert (vergrössert) und von der Mitte wieder linear vergrössert (verkleinert) bis zum ursprünglichen Wert. Die Länge jedes Stückes wird angepasst gemäss Eq.2. Die transformierten Bauteile werden dann als "butterfly" ("inverted butterfly") MMI-Koppler bezeichnet. Die Erhaltung der Selbstabbildungseigenschaften der MMI-Koppler ist am besten gewährleistet falls: a) die laterale Indexführung stark genug ist, um längs der ganzen Propagation stark multi-mode zu bleiben und b) der Winkel $\Delta\alpha$ zwischen den lateralen Flanken klein bleibt, so dass eine paraxiale Näherung immer noch gültig ist. Für kleine $\Delta\alpha$ können die Werte $(R_0.\Delta\alpha)$ und $(R_1.\Delta\alpha)$ in Eq. 2 sehr gut mit den lateralen Dimensionen $W_0$ und $(W_0+dW_1+dW_2)$ angenähert werden, wobei $dW_1$ und $dW_2$ negativ (positiv) für "butterfly"-MMI-Koppler ("inverted-butterfly") sind. Die Eingänge werden durch das erste MMI-Stück auf der Ausgangsfront (Kreisbogen $A_0$) selbstabgebildet. Die Eingangsfront im zweiten MMI-Stück ist aber der Kreisbogen $E_1$. Die Region zwischen den beiden Kreisbogen $A_0$ und $E_1$ (schaffiert auf Fig.2) verursacht Phasenunterschiede die von der lateralen Position der Selbstabbildungen abhängig sind. Diese Phasenunterschiede können durch die Wahl von $dW_1$ und $dW_2$ kontinuierlich variiert werden und kontrollieren die Intensitäts- und Phasenverhältnisse am Ausgang des Bauteils (Interferenzprozess). Gemäss dem zweiten allgemeinen Verfahren können auch die Ein- und Ausgänge zum Beispiel auf geraden Linien, anstatt auf den Kreisbogen $E_0$ und $A_1$ positioniert werden. Damit werden nur die Phasenverhältnisse nicht die Intensitätsverhältnisse geändert.

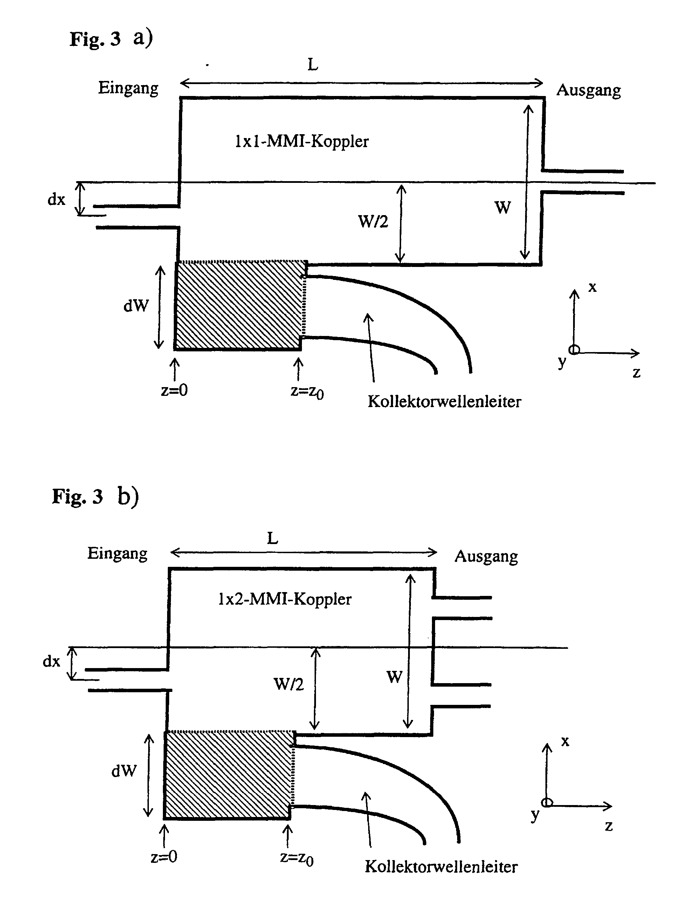

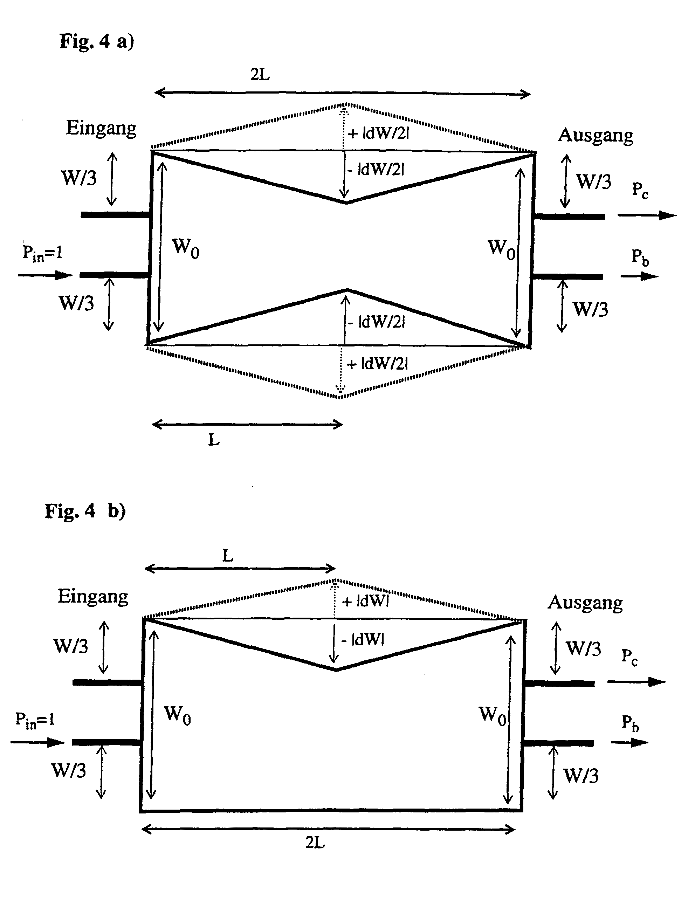

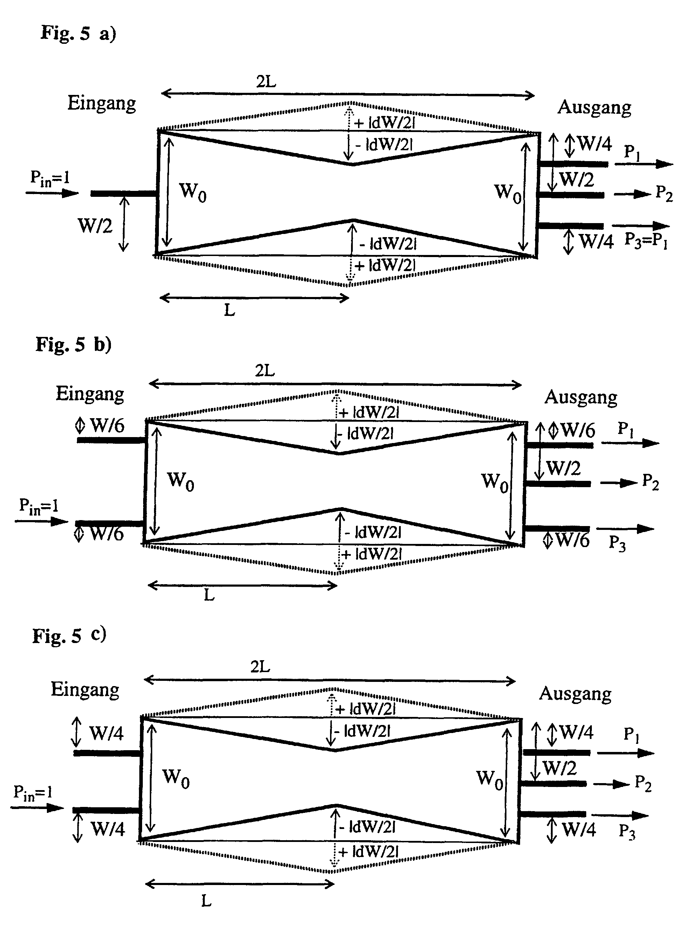

Die oben beschriebenen Verfahren lassen sich durch spezifische Verfahren ergänzen, um 1x1,1x2 und 1x3 Teiler zu produzieren. Durch kontinuierliche Variationen von geometrische Parametern können dann in diesen Teilern die Intensitätsverhältnisse kontrolliert werden. Solche spezifische Verfahren werden anhand der Figuren 3 bis 5 erklärt. In Figur 3 ist ein spezifisches Verfahren erklärt, womit ein 1x1 oder ein 1x2-Teiler produziert wird. Ein kontrollierbarer Teil der Lichtintensität wird mit einem Kollektorwellenleiter gesammelt, der Rest des Lichtes wird in einen Ausgang (Fig.3a) oder gleichmässig in zwei Ausgänge (Fig. 3b) verteilt. Der Kollektorwellenleiter kann zum Beispiel auf eine Photo-Diode führen, die als Kontrollmonitor dient. Diese Photodiode kann auch zum Beispiel direkt in die schaffierte Region (Fig3 a,b) gebracht werden und als absorbierende Region wirken. In Figure 4a,b werden spezifische Verfahren dargestellt, um 1x2-Teiler mit kontinuierlichen kontrollierbaren Ausgangsintensitätsverhältnisse zu realisieren. In Figure 5a ist ein spezifisches Verfahren erklärt, um 1x3-Teiler mit zwei Ausgängen mit gleicher Intensität zu realisieren. Das Verhältnis zwischen dem dritten Ausgang und den zwei mit gleicher Intensität ist kontinuierlich kontrollierbar. In Figure 5b,c sind spezifische Verfahren erklärt, um 1x3-Teiler zu realisieren. Die Intensitätsverhältnisse zwischen den drei Ausgängen sind variierbar.

Die Vorteile der Entdeckung sind folgende: Alle Vorteile der gewöhnlichen MMI-Koppler bleiben in den neuen MMI-Kopplern erhalten, aber dazu kommt, dass durch Anwendung von den neuen Verfahren, Aenderungen der Intensität und Phasenverhältnisse möglich sind. Wie für die gewöhnlichen MMI-Koppler, sind die neuen Bauteile kompakt, sehr gut polarisationsunabhängig (wegen der starke laterale Modeführung), eher unempfindlich gegenüber Fabrikationsungenauigkeiten und einfach zu produzieren. Durch einfache geometrische Variationen der Design-Parameter werden in den neuen Verfahren die Intensität- und Phasenverhältnisse an den verschiedenen Ausgängen verändert. Die neuen Verfahren erlauben, diese Verhältnisse den verschiedenen Anwendungsanforderungen anzupassen. Zum Beispiel kann ein kleiner wählbarer Teil der Lichtintensität auf einen Kontroll-Monitor gebracht werden (Fig.3a,b) ohne die Teiler-Funktion des MMI-Kopplers zu zerstören. Als weiteres Beispiel können auch 1x2- und 1x3-Teiler mit kontrollierbaren ungleichmässigen Ausgangsintensitäten produziert werden, und zwar einfach, kompakt, polarisationsunabhängig und tolerant auf die Herstellungsungenauigkeiten. Verglichen mit den "free-space"- Star-Kopplern, sind die neuen MMI-Koppler besonders gut als $\bar{N}$xN-Teiler für kleine $\bar{N}$ und N Werte. Sie haben auch keine Probleme mit dem "spitzigen" Spalt zwischen den Ausgängen wie in "free-space"- Star-Koppler oder in Y-Verzweigungen.

**Fig. 1**  a) Allgemeine Form eines MMI-Kopplers mit parallelen Flanken [3] [13]. Die gewöhnlichen "vollständige Interferenz NxN-MMI-Koppler" sind charakterisiert durch eine Bauteillänge L gegeben durch: L=(M/N)*3$L_c$. Dabei ist $L_c$ durch Eq. 1 gegeben (A=1).
b) Gewöhnliche "symmetrische Interferenz" 1xN MMI-Koppler mit Anregung von nur symmetrische Moden [13] [14]. Die Länge ist L=(M/N)*(3$L_c$/4) mit A=4.
c) Gewöhnliche "unvollständige Interferenz" 2xN MMI-Koppler, wobei die Moden 2,5,8 ... nicht angeregt werden [3] [13]. Die Länge ist jetzt L=(M/N)*$L_c$ mit A=3. Die Eingangsmoden sind symmetrisch und N ist gerade.

**Fig. 2**  a) "Butterfly"-MMI-Koppler. Bis zur Mitte hin wird die Breite linear verkleinert, und von da an wieder linear vergrössert bis zum ursprünglichen Wert. Die Länge jedes Stückes wird nach Eq.2 angepasst.
b) "Inverted-butterfly"-MMI-Koppler. Bis zur Mitte hin wird die Breite linear vergrössert und von da an wieder linear verkleinert bis zum ursprünglichen Wert. Die Länge jedes Stückes wird nach Eq. 2 angepasst.

**Fig. 3**  Spezifische Verfahren um ein 1x1 oder ein 1x2-Teiler mit Einführung eines Kollektorwellenleiters zu produzieren.

a) 1x1-Teiler mit Kollektorwellenleiter.
b) lx2-Teiler mit Kollektorwellenleiter.

**Fig. 4**  "Butterfly" und "inverted butterfly" MMI-Koppler als lx2-Teiler mit kontrollierten Ausgangsintensitätsverhältnissen.

a) "(Inverted) butterfly 3dB"-MMI-Koppler als 1x2-Teiler. Die Intensitätsverhältnisse zwischen den beiden Ausgängen werden durch den Verkleinerungs- oder den Vergrösserungsfaktor der Breite dW kontrolliert (Eq.3).
b) "(Inverted) butterfly cross"-MMI-Koppler als 1x2-Teiler. Die Intensitätsverhältnisse zwischen den beiden Ausgängen werden durch den Verkleinerungs- oder den Vergrösserungsfaktor der Breite dW kontrolliert (Eq. 4).

**Fig. 5**  "Butterfly" und "inverted butterfly" MMI-Koppler als 1x3-Teiler mit kontrollierten Ausgangsintensitätsverhältnissen.

a) "(Inverted) butterfly symmetrische Interferenz 1x2"-MMI-Koppler als 1x3-Teiler. Das Intensitätverhältnis zwischen den äusseren Ausgängen und dem inneren Ausgang wird durch den Verkleinerungs- oder den Vergrösserungsfaktor der Breite dW kontrolliert (Eq.5).
b) "(Inverted) butterfly "-MMI-Koppler als 1x3-Teiler: erste Version. Die Intensitätverhältnisse werden durch den Verkleinerungs- oder den Vergrösserungsfaktor der Breite dW beeinflusst. Für den Wert dW=0.38*$W_0$ ist $P_1 \cong P_2 \cong 0.44*P_{in}$ und $P_3 \cong 0.12*P_{in}$.
c) "(Inverted) butterfly "-MMI-Koppler als 1x3-Teiler: zweite Version. Die Intensitätverhältnisse werden durch den Verkleinerungs- oder den Vergrösserungsfaktor der Breite dW beeinflusst. Für den Wert dW=-0.22*$W_0$ ist $P_1 \cong P_2 \cong 0.44*P_{in}$ und $P_3 \cong 0.12*P_{in}$.

**Fig. 1**  Die allgemeine Form eines MMI-Koppler mit parallelen Flanken ist in Fig.1a gezeigt [3] [13]. Die gewöhnlichen "vollständige Interferenz NxN-MMI-Koppler" sind charakterisiert durch eine Bauteillänge L gegeben durch: L=(M/N)*3$L_c$. Dabei ist $L_c$ durch Eq. 1 gegeben (A=1). Dabei sind $\beta_0$ und $\beta_1$ die Propagationskonstanten der ersten zwei Moden des MMI-Kopplers. W ist die Breite des MMI-Kopplers und n ist der Index in der MMI-Sektion. λ ist die Wellenlänge im Vakuum. N ist die Anzahl Bilder d.h. auch die Anzahl Ein-und Ausgänge. M ist ein ganze Zahl. N und M sind teilerfremd. Die Bilder haben alle dieselbe Intensität. Der Parameter b ist frei wählbar. Da die rationalen Zahlen (M/N) in den reellen Zahlen dicht sind, kann jede Länge L in beliebig guter Näherung als eine Länge wo Selbstabbildung erscheint dargestellt werden. Dabei können aber die Bilder sich überlappen und das gesamte Bildmuster am Ausgang ist dann die kohärente Summe alle dieser Bilder. Falls der Parameter b gleich 0 oder W/N ist, dann werden die Selbstabbildungen sich paarweise kohärent überlappen. Das führt zu einer Reduktion der Anzahl Bilder und zu ungleichmässigen Intensitätsverhältnissen an den verschiedenen Ausgängen. In diesem Fall hat man einen gewöhnlichen "überlappende Interferenz" MMI-Koppler. Diese können ungleichmässige Intensitätsverhältnisse haben, aber die sind nicht kontrollierbar. Die Verhältnisse sind fest definiert für jede Sorte von diesen Elementen.

Zwei Spezialfälle von gewöhnlichen "überlappende Interferenz" MMI-Koppler sind in der Literatur besonders studiert worden. In beiden Fällen liefert die Ueberlagpung der Bilder verschwindende Bilderpaare (destruktive Ueberlappung) und Bilderpaare mit derselben Intensität. Damit erhält man für die verbleibenden Bilder eine gleichmässige Intensität. In den gewöhnlichen "symmetrische Interferenz" 1xN MMI-Kopplern (Fig. 1b) werden nur symmetrische Moden angeregt [13] [14]. Die Länge ist $L=(M/N)*(3L_c/4)$, wobei $L_c$ in Eq. 1 definiert ist (A=4). Symmetrische Moden sollen am Eingang verwendet werden. In den gewöhnlichen "unvollständige Interferenz" 2xN MMI-Kopplern werden die Moden 2,5,8 ... nicht angeregt [3] [13]. Das wird erreicht, indem die zwei Eingänge an W/3 und 2W/3 plaziert werden (Fig. 1c). Die Länge ist jetzt $L=(M/N)*L_c$ mit A=3. Die Eingangsmoden sind symmetrisch und N ist gerade.

**Fig. 2**   Spezielle Verfahren dadurch gekennzeichnet, dass das Schiefstellen der lateralen Flanken (und die damit gekoppelte Anpassung der Längen und der Ein- und Ausgangswellenleiter Positionen und Richtungen) als zwei- oder dreidimensionale Transformation verwendet wird. Diese Transformationen und die nötigen Anpassungen können einfach durch Koordinatentransformationen (Zylindrischen oder Kugeltransformationen) analysiert werden. Nach den Transformationen sind die Eingangs- und Ausgangsfronten jedes Stückes auf Kreis- oder Kugelflächen. Wegen der Nicht-Uebereinstimmung dieser Fronten entstehen Phasenverschiebungen zwischen den MMI-Stücken. Dadurch ändert sich das Interferenzbild und die Intensitätsverhältnissen am Ausgang des ganzen Bauteils. In Fig.2 ist eine Variante dieses Verfahrens illustriert, wo der gewöhnliche MMI-Koppler nur in der Mitte geteilt wird. Fig.2a) "Butterfly"-MMI-Koppler. Bis in die Mitte wird die Breite linear verkleinert, und von der Mitte wieder linear vergrössert bis zum ursprünglichen Wert. Die Länge jedes Stückes wird gemäss Eq.2 angepasst.

Fig. 2b) "Inverted-butterfly"-MMI-Koppler. Bis in die Mitte wird die Breite linear vergrössert und von der Mitte wieder linear verkleinert bis zum ursprünglichen Wert. Die Länge jedes Stückes wird gemäss Eq.2 angepasst. Die Erhaltung der Selbstabbildungseigenschaften der MMI-Koppler ist am besten gewährleistet falls: 1) die laterale Indexführung stark genug ist, um längs der ganzen Propagation stark multi-mode zu bleiben und 2) der Winkel $\Delta\alpha$ zwischen den lateralen Flanken klein bleibt, so dass eine paraxiale Näherung immer noch gültig ist. Für kleine $\Delta\alpha$ können die Werte $(R_0.\Delta\alpha)$ und $(R_1.\Delta\alpha)$ in Eq. 2 sehr gut mit den lateralen Dimensionen $W_0$ und $(W_0+dW_1+dW_2)$ angenähert werden, wobei $dW_1$und $dW_2$ sind negativ (positiv) für "butterfly"-MMI-Koppler ("inverted-butterfly").

Die Eingänge werden durch das erste MMI-Stück auf der Ausgangsfront (Kreisbogen $A_0$) selbstabgebildet. Die Eingangsfront im zweiten MMI-Stück ist aber der Kreisbogen $E_1$. Die Region zwischen den beiden Kreisbogen $A_0$ und $E_1$ (schaffiert auf Fig.2) verursacht Phasenunterschiede die von der laterale Position der Selbstabbildungen abhängig sind. Diese Phasenunterschiede können durch die Wahl von $dW_1$und $dW_2$ kontinuierlich variert werden und kontrollieren die Intensitäts- und Phasenverhältnisse am Ausgang des Bauteils (Interferenzprozess). Gemäss dem zweiten allgemeinen Verfahren können auch die Ein- und Ausgänge zum Beispiel auf geraden Linien anstatt auf den Kreisbogen $E_0$ und $A_1$ positioniert werden. Damit werden nur die Phasenverhältnisse, nicht aber die Intensitätsverhältnisse geändert.

**Fig. 3**   Spezifische Verfahren um ein 1x1 oder ein 1x2-Teiler mit Einführung eines Kollektor-Wellenleiter zu produzieren. Der Kollektor-Wellenleiter kann zum Beispiel auf eine Photo-Diode führen, die als Kontrollmonitor dient.

a) 1x1-Teiler mit Kollektor-Wellenleiter. Ein gewöhnlicher "symmetrische Interferenz" 1x1-MMI-Koppler (mit N=1, M=1, A=4, und L aus Eq.1) wird am Ort $z=z_0$ in zwei geteilt. Der erste Teil wird auf einer Seite um den Wert dW verbreitert. An dieser Seite werden die Lichtradiationen mit einem Kollektorwellenleiter gesammelt. Durch eine leichte Verschiebung dx der Eingangswellenleiter kann die ursprüngliche Selbstabbildungscharakteristik wieder hergestellt werden, das heisst: ein einziges Bild erscheint am Ausgang. Durch die Wahl von $z_0$ kann die Intensität im Kollektorwellenleiter gewählt werden. Das Verfahren ist besonders für kleine Werte von $z_0$ gut geeignet. Die exakten Werten von $z_0$, dW und dx können mit Simulationsprogrammen (wie zum Beispiel BPM [2] oder MA [3]) berechnet werden.

Als Variante kann ein lichtabsorbierendes Material in die verbreiterte Region des erstes MMI-Stücks (schaffierte Region) eingeführt werden. Am Eingang des absorbierenden Materials soll keine Reflektion vorkommen. Die Radiationen werden direkt absorbiert ohne durch einen Wellenleiter gesammelt zu werden.

b) 1x2-Teiler mit Kollektor-Wellenleiter. Ein gewöhnlicher "symmetrische Interferenz" 1x2-MMI-Koppler (mit N=2, M=1, A=4, und L aus Eq.1) wird am Ort $z=z_0$ in zwei geteilt. Der erste Teil wird auf einer Seite um den Wert dW verbreitert. An dieser Seite werden die Lichtradiationen mit einem Kollektorwellenleiter gesammelt. Durch eine leichte Verschiebung dx der Eingangswellenleiter kann die ursprüngliche Selbstabbildungcharakteristik wieder hergestellt werden, das heisst: zwei Bilder erscheinen mit gleicher Intensität an den zwei Ausgängen. Durch die Wahl von $z_0$ kann die Intensität im Kollektorwellenleiter gewählt werden. Das Verfahren ist besonders für kleine Werte von $z_0$ gut geeignet. Die exakten Werten von $z_0$, dW und dx können mit Simulationsprogrammen (wie zum Beispiel BPM [2] oder MA [3]) berechnet werden.

Als Variante kann ein lichtabsorbierendes Material in der verbreiterte Region des erstes MMI-Stücks (schaffierte Region) eingeführt werden. Am Eingang des absorbierenden Materials soll keine Reflektion vorkommen. Die Radiationen werden direkt absorbiert ohne durch einen Wellenleiter gesammelt zu werden.

**Fig. 4**    "Butterfly" und "inverted butterfly" MMI-Koppler als 1x2-Teiler mit kontrollierten Ausgangsintensitätsverhältnissen. Die Ausgangsintensitäten können durch einfache Aenderungen von geometrischen Parametern gewählt werden. (Die gestrichelten Linien gelten für "inverted butterfly" MMI-Koppler).

a) "(Inverted) butterfly 3dB"-MMI-Koppler als 1x2-Teiler. Ein gewöhnlicher "unvollständige Interferenz 3dB-MMI-Koppler" (2x2-MMI-Koppler aus Fig.1c mit M=1,N=2 und Länge aus Eq. 1 mit A=3) wird in der Mitte geteilt und zu "butterfly" oder "inverted butterfly" MMI-Koppler transformiert (Wie auf Fig.2a,b). Die Verkleinerung ("butterfly") oder die Vergrösserung ("inverted butterfly") der Breite erfolgt symmetrisch (auf beider Seiten gleich), d.h. $dW_1=dW_2=dW/2$ (Fig.2a,b). Die Länge wird angepasst. Für das halbe MMI-Stück ist die Länge L aus Eq. 2 mit M=1,N=4, A=3 gegeben. Für kleine $\Delta\alpha$ können die Werte $(R_0 \cdot \Delta\alpha)$ und $(R_1 \cdot \Delta\alpha)$ in Eq. 2 sehr gut mit den lateralen Dimensionen $W_0$ und $(W_0+ dW)$ angenähert werden, wobei dW negativ (positiv) für "butterfly"-MMI-Koppler ("inverted-butterfly") ist.

Falls die Eingangsintensität $P_{in}$ zu eins normiert ist dann ist die "cross"-Intensität $P_c$ gegeben durch:

$$P_c = \frac{1}{2} \cdot (1 - \sin(\frac{\pi}{2} \cdot \frac{dW}{W_0})) \qquad \text{(Eq. 3)}$$

Die "bar"-Intensität $P_b$ ist im Idealfall bei $P_b=1-P_c$ gegeben.

b) "(Inverted) butterfly cross"-MMI-Koppler als 1x2-Teiler. Ein gewöhnlicher "unvollständige Interferenz cross-MMI-Koppler" (2x 1-MMI-Koppler aus Fig.1c mit M=1,N=1 und Länge aus Eq. 1 mit A=3) wird in der Mitte geteilt und zu "butterfly" oder "inverted butterfly" MMI-Koppler transformiert (Wie auf Fig.2a,b). Die Verkleinerung ("butterfly") oder die Vergrösserung ("inverted butterfly") der Breite erfolgt nur auf einer Seite, d.h. $dW_1=dW$ und $dW_2=0$ (Fig.2a,b). Die Länge wird angepasst. Für das halbe MMI-Stück ist die Länge L aus Eq. 2 mit M=1,N=2, A=3 gegeben. Für kleine $\Delta\alpha$ können die Werte $(R_0 \cdot \Delta\alpha)$ und $(R_1 \cdot \Delta\alpha)$ in Eq. 2 sehr gut mit den lateralen Dimensionen $W_0$ und $(W_0+dW)$ angenähert werden, wobei dW negativ (positiv) für "butterfly"-MMI-Koppler ("inverted-butterfly") ist.

Falls die Eingangsintensität $P_{in}$ zu eins normiert ist dann ist die "cross"-Intensität $P_c$ gegeben durch:

$$P_c = \cos^2(\frac{\pi}{2} \cdot \frac{dW}{W_0}) \qquad \text{(Eq. 4)}$$

Die "bar"-Intensität $P_b$ ist in ideal Fall bei $P_b=1-P_c$ gegeben.

Die Bauteile (Fig4 a,b) wirken dann als 1x2-Strahlteiler, wobei das Intensitätsverhältnis zwischen den beiden Ausgängen durch den Verkleinerungs- oder den Vergrösserungsfaktor der Breite dW kontrolliert wird.

Zu bemerken ist, dass die Ein- und Ausgänge auf geraden Linien anstatt auf Kreisbogen (wie auf Fig.2) positioniert sind. Gemäss dem zweiten allgemeinen Verfahren werden damit nur die Phasenverhältnisse nicht aber die Intensitätsverhältnisse am Ausgang geändert.

**Fig. 5**    "Butterfly" und "inverted butterfly" MMI-Koppler als 1x3-Teiler mit kontrollierten Ausgangsintensitätsverhältnissen. Die Ausgangsintensitäten können durch einfache Aenderungen von geometrischen Parametern gewählt werden. (Die gestrichelten Linien gelten für "inverted butterfly" MMI-Koppler).

a) "(Inverted) butterfly symmetrische Interferenz 1x2"-MMI-Koppler als 1x3-Teiler. Ein gewöhnlicher "symmetrische Interferenz 1x2-MMI-Koppler" (Fig. 1b mit M=1,N=2 und Länge aus Eq. 1 mit A=4) wird in der Mitte geteilt und zu "butterfly" oder "inverted butterfly" MMI-Koppler transformiert (Wie auf Fig.2a,b). Die Verkleinerung ("butterfly") oder die Vergrösserung ("inverted butterfly") der Breite erfolgt symmetrisch (auf beiden Seiten gleich), d.h. $dW_1=dW_2=dW/2$ (Fig.2a,b). Die Länge wird angepasst. Für das halbe MMI-Stück ist die Länge L aus Eq. 2 mit M=1,N=4, A=4 gegeben. Für kleine $\Delta\alpha$ können die Werte $(R_0.\Delta\alpha)$ und $(R_1.\Delta\alpha)$ in Eq. 2 sehr gut mit den lateralen Dimensionen $W_0$ und $(W_0+ dW)$ angenähert werden, wobei dW negativ (positiv) für "butterfly"-MMI-Koppler ("inverted-butterfly") ist.

Aus Symmetriegründen ist $P_1=P_3$. Falls die Eingangsintensität $P_{in}$ zu eins normiert ist dann ist die Intensität $P_2$ gegeben durch:

$$P_2 = \sin^2\left(\frac{\pi}{2}.\frac{dW}{W_0}\right) \qquad\qquad (Eq.\ 5)$$

$P_1$ und $P_3$ sind im Idealfall bei $P_1=P_3=(1-P_2)/2$ gegeben. Das Intensitätverhältnis zwischen den äusseren Ausgängen und dem inneren Ausgang wird durch den Verkleinerungs- oder den Vergrösserungsfaktor der Breite dW kontrolliert.

b) "(Inverted) butterfly "-MMI-Koppler als 1x3-Teiler: erste Version. Ein gewöhnlicher "unvollständige Interferenz 3dB-MMI-Koppler" (2x2-MMI-Koppler aus Fig.1c mit M=1,N=2 und Länge aus Eq. 1 mit A=3) wird in der Mitte geteilt und zu "butterfly" oder "inverted butterfly" MMI-Koppler transformiert (Wie auf Fig.2a,b). Die Verkleinerung ("butterfly") oder die Vergrösserung ("inverted butterfly") der Breite erfolgt symmetrisch (auf beider Seiten gleich), d.h. $dW_1=dW_2=dW/2$ (Fig.2a,b). Die Länge wird angepasst. Für das halbe MMI-Stück ist die Länge L aus Eq. 2 mit M=1,N=4, A=3 gegeben. Für kleine $\Delta\alpha$ können die Werte $(R_0.\Delta\alpha)$ und $(R_1.\Delta\alpha)$ in Eq. 2 sehr gut mit den lateralen Dimensionen $W_0$ und $(W_0+dW)$ angenähert werden, wobei dW negativ (positiv) für "butterfly"-MMI-Koppler ("inverted-butterfly") ist. Die Position der Eingangswellenleiter wird angepasst. Die Eingangswellenleiter werden auf ein Sechstel der Breite (vom MMI-Rand aus gemessen) positioniert. Das Bauteil wirkt als 1x3-Strahlteiler. Die Intensitätverhältnisse zwischen den Ausgängen werden durch den Verkleinerungs- oder den Vergrösserungsfaktor der Breite dW beeinflusst. Spezial für den Wert $dW=0.38*W_0$ ist $P_1 \cong P_2 \cong 0.44*P_{in}$ und $P_3 \cong 0.12*P_{in}$.

c) "(Inverted) butterfly "-MMI-Koppler als 1x3-Teiler: zweite Version. Ein gewöhnlicher "symmetrische Interferenz 1x2-MMI-Koppler" (1x2-MMI-Koppler aus Fig.1b mit M=1,N=2 und Länge aus Eq. 1 mit A=4) wird in der Mitte geteilt und zu "butterfly" oder "inverted butterfly" MMI-Koppler transformiert (Wie auf Fig.2a,b). Die Verkleinerung ("butterfly") oder die Vergrösserung ("inverted butterfly") der Breite erfolgt symmetrisch (auf beider Seiten gleich), d.h. $dW_1=dW_2=dW/2$ (Fig.2a,b). Die Länge wird angepasst. Für das halbe MMI-Stück ist die Länge L aus Eq. 2 mit M=1,N=4, A=4 gegeben. Für kleine $\Delta\alpha$ können die Werte $(R_0.\Delta\alpha)$ und $(R_1.\Delta\alpha)$ in Eq. 2 sehr gut mit den lateralen Dimensionen $W_0$ und $(W_0+dW)$ angenähert werden, wobei dW negativ (positiv) für "butterfly"-MMI-Koppler ("inverted-butterfly") ist . Die Position der Einganwellenleiter wird angepasst. Die Eingangswellenleiter werden auf ein Viertel der Breite (vom MMI-Rand aus gemessen) positioniert. Der Bauteil wirkt als 1x3-Strahlteiler. Die Intensitätsverhältnisse zwischen den Ausgängen werden durch den Verkleinerungs- oder den Vergrösserungsfaktor der Breite dW beeinflusst. Spezial für den Wert $dW=-0.22*W_0$ ist $P_1 \cong P_2 \cong 0.44*P_{in}$ und $P_3 \cong 0.12*P_{in}$.

Für die Bauteile der Fig. 5a,b,c ist zu bemerken, dass die Ein- und Ausgänge auf geraden Linien anstatt auf Kreisbogen (wie auf Fig.2) positioniert sind. Gemäss dem zweiten allgemeinen Verfahren werden damit nur die Phasenverhältnisse, nicht aber die Intensitätsverhältnisse am Ausgang geändert.

## Referenzen

[1] T. Tamir:'Integrated Optics', Topics in Applied Physics vol.7, Springer Verlag 2nd Edition, 1985, ISBN 0-387-09673-6.

[2] Y.C. Chung and N Dagli 'An assessment of finite difference beam propagation method', J. Quantum Electonics, vol. 26, pp. 1335-1339, 1990

[3] L. Soldano, F. Veerman, M. Smit, B. Verbeek, A. Dubost, E. Pennings: "Planar Monomode Optical Couplers based on Multimode Interference Effects", J. Lightwave Technology, Vol. 10, No 12, Dec.92, pp. 1843-1849.

[4] R.M. Knox, P.P. Toulios:' Integrated circuits for milimeter through optical frequency range' in Proc. Symp. Submillimeter waves, Polytechnic Inst. Brooklyn, Brooklyn, NY, Mar. 1970, pp. 497-516.

[5] K. Tsutsumi et all. ' Analysis of single-mode optical Y-Junctions by Bounded step and bend approximation', J. Lightwave Technology, Vol.6, pp. 590-600, 1988

[6] H. Yajima 'Coupled mode analysis of dielectric planar branching waveguides' J. Quantum Electonics, vol. 14, pp. 749-755, 1978

[7] L. Stoll, et all.' compact and polarization independent optical switch on inP/InGaAsP' Proc. ECOC'92, Berlin, paper Tu B7.2, pp.337-340.

[8] M. Papuchon et all.:' Electically active optical bifurcation :BOA', Appl. Phys. Lett., vol.31, pp. 266-267, 1977.

[9] M. Ikeda et all.:' Loss-less 4x4 monolithic LD optical matrix switches', Photonic Switching'92, paper 2B1, 1992.

[10] C. Dragone et all.:' Efficient multichannel Integrated Optics Star coupler on Silicon', IEEE Photon. Technol. Lett., vol.1, pp. 241-243, 1989.

[11] O. Bryngdahl:' Image formation using self-imaging techniques', J. Opt. Soc. Am. vol.63, pp. 416-419, 1973.

[12] R. Ulrich et all.:' Self-imaging in homogeneous planar optical waveguides' Appl. Phys. Lett., vol. 27, pp. 337-339, 1975.

[13] P. Besse, M. Bachmann, H. Melchior:"Phase relations in multi-mode interference couplers and their application to generalized integrated Mach-Zehnder optical switches",Proc. ECIO'93, Neuchatel,paper 2-22.

[14] J.M. Heaton, R.M. Jenkins, D.R. Wight, J.T. Parker, J.C.H. Birbeck, and K.P. Hilton, "Novel 1-to-N way integrated optical beam splitters using symmetric mode mixing in GaAs/AlGaAs multimode waveguides", Appl. Phys. Lett. 61 (15), pp. 1754-1756, 1992.

[15] M. Heiblum et all.:' Analysis of curved optical waveguides by cojnformal Transformation', J. Quantum Elec., vol. 11, pp. 75-83, 1975.

[16] L. Soldano, F. Veerman, M. Smit, B. Verbeek: "High-performance monomode planar couplers using a short multi-mode interference section", Proc. ECOC'91, Paris, paper TuB5-2, pp. 225-228., 1991

[17] E.C.M. Pennings et all.;' Ultra-compact, low-loss directional couplerstructures on InP for monolithic integration', Proc. ECOC'91, Paris, paper WeA7-3, pp. 405-408, 1991.

[18] L.B. Soldano:' large optical bandwidth of InGaAsP/InP Multi-Mode Interference 3dB couplers', Proc. ECIO'93, Neuchatel, paper 14-10., 1993

## Patentansprüche

1. Multimode-Interferenz-Koppler mit einer Eingangsfläche und einer Ausgangsfläche, welcher Koppler zumindest ein erstes und ein zweites in Propagationsrichtung angeordnetes Stück umfaßt, die zusammen einen Multimodewellenleiter bilden, **dadurch gekennzeichnet, daß** eine Seite des Kopplers aus zumindest zwei nicht in einer gemeinsamen Ebene liegenden lateralen Flanken gebildet ist, wobei die eine Flanke dem ersten Stück die andere Flanke dem zweiten Stück zugeordnet ist, daß jedes Stück selbst ein Multimode-Interferenz-Koppler mit einer Anfangsfläche und Endfläche ist, und zumindest eines der Stücke eine von einem gewöhnlichen Multimode-Interferenz-Koppler mit parallelen Seiten abweichende Geometrie besitzt, jedoch in erster Näherung den gleichen charakteristischen Selbstabbildungseffekt dieses gewöhnlichen Multimode-Interferenz-Kopplers aufweist, so daß an der Endfläche des genannten Stücks vom gewöhnlichen Multimode-Interferenz-Koppler abweichende Phasenverteilungen auftreten, wobei diese Phasenverteilungen ein erwünschte Interferenzerscheinung an der Ausgangsfläche bewirken.

2. Multimode-Interferenz-Koppler nach Anspruch 1, worin zumindest ein Stück in erster Näherung einen Multimode-Interferenz-Koppler mit einer vom Multimode-Interferenz-Koppler mit paarallen Seitenflächen abweichenden Geometrie bildet, so daß eine vom gewöhnlichen Multimode-Interferenz-Koppler abweichende Anzahl Selbstabbildungen an der Endfläche dieses Stücks auftritt.

3. Multimode-Interferenz-Koppler nach Anspruch 1 oder 2, worin die Breite oder Länge eines Stücks sich von der Breite oder Länge eines gewöhnlichen Multimode-Interferenz-Kopplers unterscheidet, um abweichende Phasenverteilungen oder eine abweichende Anzahl Selbstabbildungen des genannten Stücks zu erreichen.

4. Multimode-Interferenz-Koppler nach Anspruch 1, worin zum Erzielen der abweichenden Phasenverteilungen des genannten Stücks zumindest eine laterale Flanke eines Stücks schief gestellt ist.

5. Multimode-Interferenz-Koppler nach Anspruch 4, worin beide lateralen Flanken des Stücks mit der gleichen Nei-gung schief gestellt sind.

EP 0 677 174 B1

**6.** Multimode-Interferenz-Koppler nach Anspruch 4 oder 5, worin von zwei Stücken die Breite jedes dieser Stücke in Richtung des anderen Stücks linear kleiner oder größer wird.

**7.** Multimode-Interferenz-Koppler nach Anspruch 1, worin zumindest ein Stück eine schief gestellte laterale Flanke umfaßt und eine Anfangsfläche oder Endfläche des Stücks eine Ebene ist.

**8.** Multimode-Interferenz-Koppler nach einem der Ansprüche 4 bis 7, worin die Länge eines Stücks sich von der Länge eines gewöhnlichen Multimode-Interferenz-Kopplers unterscheidet.

**9.** Multimode-Interferenz-Koppler nach Anspruch 2, mit zumindest zwei Stücken, worin die Ausgangsfläche einen Teil der Endflächen des ersten und des zweiten Stücks umfaßt, das erste Stück breiter ist als das zweite Stück und worin Korrekturen hinsichtlich Position, Breite oder Einfallswinkel eines Eingangswellenleiters an der Eingangsfläche oder von Ausgangswellenleitern an der Ausgangsfläche und eine Korrektur der Länge des zweiten Stücks zu der erwünschten Interferenzerscheinung an der Ausgangsfläche führen.

**10.** Multimode-Interferenz-Koppler nach Anspruch 9, worin ein Gebiet des Multimodewellenleiters des ersten Stücks ein lichtabsorbierendes Material umfaßt.

**11.** Verfahren zur Veränderung der Geometrie eines Multimode-Interferenz-Kopplers mit parallelen Seitenflächen, so daß sich die Intensitäts- und Phasenverteilung an der Ausgangsfläche des Multimode-Interferenz-Kopplers verändert, bei dem der Multimode-Interferenz-Koppler mit parallelen Seitenflächen in folgender Weise modifiziert wird:

der Multimode-Interferenz-Koppler wird in Propagationsrichtung in zumindest ein erstes und ein zweites Stück unterteilt, so daß jedes Teil selbst ein Multimode-Interferenz-Koppler mit einer Anfangsfläche und einer Endfläche ist,
zumindest eines dieser Stücke wird so verändert, daß eine Seitenfläche des Multimode-Interferenz-Kopplers aus zumindest zwei nicht in einer gemeinsamen Ebene liegenden lateralen Flanken gebildet ist, wobei die eine Flanke dem ersten Stück und die andere Flanke dem zweiten Stück zugeordnet ist, und ein Stück einen Multimode-Interferenz-Koppler bildet, der in erster Näherung eine Phasenverteilung an der Endfläche aufweist, die sich von der Phasenverteilung an der Endfläche eines Multimode-Interferenz-Kopplers mit parallelen Seitenflächen unterscheidet, wobei diese veränderte Phasenverteilung die Interferenzerscheinung an der Ausgangsfläche des ursprünglichen Multimode-Interferenz-Kopplers in eine gewünschte Interferenzerscheinung an der Ausgangsfläche des modifizierten Multimode-Interferenz-Kopplers ändert.

**12.** Verfahren nach Anspruch 11, worin die Transformation zumindest eine der folgenden ist: Breitenänderung, Längenänderung und Schiefstellen von lateralen Flanken, laterale Verschiebung, Schiefstellen und Ändern der Abmessungen von Eingangs- oder Ausgangswellenleitern.

**Claims**

**1.** A multimode interference coupler having an input face and an output face, which coupler comprises at least a first and a second section which are arranged in the direction of propagation and jointly constitute a multimode waveguide, **characterized in that** a side of the coupler consists of at least two lateral sides which are not situated in a common plane, one side being assigned to the first section and the other side being assigned to the second section, **in that** each section itself is a multimode interference coupler with a start face and an end face, and at least one of the sections has a geometry which deviates from conventional multimode interference couplers with parallel sides but in a first approximation has the same characteristic self-imaging effect of this conventional multimode interference coupler, so that phase distributions which differ from the conventional multimode interference coupler occur at the end face of said section, said phase distributions realising a desired interference phenomenon at the output face.

**2.** A multimode interference coupler as claimed in claim 1, wherein at least one section constitutes, in a first approximation, a multimode interference coupler having a geometry which differs from the multimode interference coupler with parallel sides, so that a number of self-images which differ from the conventional multimode interference coupler appear at the end face of said section.

**3.** A multimode interference coupler as claimed in claim 1 or 2, wherein the width or length of a section differs from the width or length of a conventional multimode interference coupler so as to achieve different phase distributions or a different number of self-images of said section.

4. A multimode interference coupler as claimed in claim 1, wherein at least a lateral side of a section is slanted for achieving the different phase ratios of said section.

5. A multimode interference coupler as claimed in claim 4, wherein the two lateral sides of the section are slanted at the same inclination.

6. A multimode interference coupler as claimed in claim 4 or 5, wherein, of two sections, the width of each of said sections becomes linearly smaller or larger in the direction of the other section.

7. A multimode interference coupler as claimed in claim 1, wherein at least one section has a slanted lateral side, and a start face or end face of said section is a plane.

8. A multimode interference coupler as claimed in any one of claims 4 to 7, wherein the length of a section differs from the length of a conventional multimode interference coupler.

9. A multimode interference coupler as claimed in claim 2, having at least two sections, wherein the output face comprises a part of the end faces of the first and the second section, the first section being wider than the second section, and wherein corrections as regards position, width or angle of incidence of an input waveguide at the input face or of output waveguides at the output face, and a correction of the length of the second section lead to the desired interference phenomenon at the output face.

10. A multimode interference coupler as claimed in claim 9, wherein an area of the multimode waveguide of the first section comprises a light-absorbing material.

11. A method of changing the geometry of a multimode interference coupler with parallel lateral sides so that the intensity and phase distribution changes at the output face of the multimode interference coupler, which multimode interference coupler with parallel lateral sides is modified in the following way:

the multimode interference coupler is split into at least a first and a second section in the direction of propagation so that each section itself is a multimode interference coupler having a start face and end face,
at least one of these sections is changed in such a way that a lateral side of the multimode interference coupler is constituted by at least two lateral sides which are not situated in a common plane, one side being assigned to the first section and the other side being assigned to the second section and one section constitutes a multimode interference coupler which, in a first approximation, has a phase distribution at its end face which differs from the phase distribution at the end face of a multimode interference coupler with parallel sides, which changed phase distribution changes the interference phenomenon at the output face of the original multimode interference coupler into a desired interference phenomenon at the output face of the modified multimode interference coupler.

12. A method as claimed in claim 11, wherein the transformation is at least one of: width change, length change and slanting of lateral sides, lateral displacement, slanting and change of the dimensions of input or output waveguides.

**Revendications**

1. Coupleur multimode à interférence avec une surface d'entrée et une surface de sortie, lequel coupleur comprend au moins une première et une deuxième pièces disposées dans le sens de propagation qui forment ensemble un guide d'ondes multimode, **caractérisé en ce qu'**un côté du coupleur est formé d'au moins deux flancs latéraux non situés dans un plan commun, l'un des flancs étant affecté à la première pièce et l'autre à la deuxième pièce, que chaque pièce est elle-même un coupleur multimode à interférences avec une surface d'extrémité initiale et une surface d'extrémité finale et au moins une des pièces possède une géométrie différant d'un coupleur multimode à interférences ordinaire avec des côtés parallèles mais, dans une première approximation, présente le même effet d'auto-image caractéristique que ce coupleur multimode à interférence ordinaire de telle sorte qu'il se produise à la surface d'extrémité de ladite pièce des répartitions de phase différant du coupleur multimode à interférence ordinaire, ces répartitions de phase assurant un phénomène d'interférence souhaité à la surface de sortie.

**EP 0 677 174 B1**

**2.** Coupleur multimode à interférence selon la revendication 1, au moins une pièce formant dans une première approximation un coupleur multimode à interférences avec une géométrie différant du coupleur multimode à interférence aux surfaces latérales parallèles, de telle sorte qu'un nombre d'auto-images différent d'un coupleur multimode à interférence ordinaire se produise à la surface d'extrémité de cette pièce.

**3.** Coupleur multimode à interférences selon l'une des revendications 1 ou 2, dans lequel la largeur ou la longueur d'une pièce se distingue de la largeur ou de la longueur d'un coupleur multimode à interférences ordinaire pour parvenir à des répartitions de phase différentes ou à un nombre différent d'auto-images de ladite pièce.

**4.** Coupleur multimode à interférence selon la revendication 1, dans lequel au moins un flanc latéral d'une pièce est biseauté pour parvenir à des répartitions de phase différentes de ladite pièce.

**5.** Coupleur multimode à interférence selon la revendication 4, dans lequel deux flancs latéraux de la pièce sont biseautés avec la même inclinaison.

**6.** Coupleur multimode à interférence selon l'une des revendications 4 ou 5, dans laquelle, des deux pièces, la largeur de chacune de ces pièces est augmentée ou réduite linéairement dans la direction de l'autre pièce.

**7.** Coupleur multimode à interférence selon la revendication 1, dans laquelle au moins une pièce présente un flanc latéral biseauté et une surface d'extrémité finale ou une surface d'extrémité initiale de la pièce est un plan.

**8.** Coupleur multimode à interférence selon l'une des revendications 4 à 7 dans lequel la longueur d'une pièce se distingue de la longueur d'un coupleur multimode à interférence ordinaire.

**9.** Coupleur multimode à interférences selon la revendication 2, avec au moins deux pièces, dans lequel la surface de sortie comprend une partie des surfaces d'extrémité des première et deuxième pièces, la première pièce étant plus large que la deuxième pièce et dans laquelle des corrections sur le plan de la position, de la largeur ou de l'angle d'incidence d'un guide d'ondes d'entrée à la surface d'entrée ou de guides d'onde de sortie à la surface de sortie et une correction de la longueur de la deuxième pièce conduisent au phénomène d'interférence souhaité à la surface de sortie.

**10.** Coupleur multimode à interférences selon la revendication 9, dans lequel une zone du guide d'ondes multimode de la première pièce comprend un matériau absorbant la lumière.

**11.** Procédé de variation de la géométrie d'un coupleur multimode à interférences avec des surfaces latérales parallèles de telle sorte que la répartition de l'intensité et des phases à la surface de sortie du coupleur multimode à interférences varie, le coupleur multimode à interférence avec des surfaces latérales parallèles étant modifié de la manière suivante:

le coupleur multimode à interférence est réparti en au moins une première et une deuxième pièces de telle sorte que chaque partie soit elle-même un coupleur multimode à interférences avec une surface d'extrémité initiale et une surface d'extrémité finale,
au moins une de ces pièces est modifiée de telle sorte qu'une surface latérale du coupleur multimode à interférences soit formée d'au moins deux flancs latéraux non disposés dans un plan commun, l'un des flancs étant affecté à la première pièce et l'autre flanc à la deuxième pièce et une pièce formant un coupleur multimode à interférence qui présente dans une première approximation une répartition de phase à la surface d'extrémité finale qui se distingue de la répartition de phase à la surface d'extrémité d'un coupleur multimode à interférences avec des surfaces latérales parallèles, cette répartition de phase modifiée faisant varier le phénomène d'interférence à la surface de sortie du coupleur multimode à interférences initial en un phénomène d'interférence souhaité à la surface de sortie du coupleur multimode à interférence modifié.

**12.** Procédé selon la revendication 11, dans lequel la transformation est au moins une des suivantes: changement de largeur, changement de longueur et biseautation de flancs latéraux, déplacement latérale, biseautation et changement des dimensions de guides d'ondes d'entrée et de sortie.

**Fig. 1  a)**

$L=(M/N)*3L_c$

W/N

W

2W/N

2W/N

Eingang →

Ausgang →

2W/N

2b

2b

W/N

**Fig. 1  b)**

$L=(M/N)*3L_c/4$

W/2N

W/N

W

W/N

Eingang →

Ausgang →

W/2

**Fig. 1  c)**

$L=(M/N)*L_c$

W/3

W/N

W

2W/N

Eingang →

Ausgang →

2W/3N

W/3

Fig. 2 a)

Fig. 2 b)

**Fig. 3 a)**

Eingang · L Ausgang

1x1-MMI-Koppler

dx

W/2 W

dW

z=0 z=z$_0$

Kollektorwellenleiter

x
y z

**Fig. 3 b)**

Eingang L Ausgang

1x2-MMI-Koppler

dx

W/2 W

dW

z=0 z=z$_0$

Kollektorwellenleiter

x
y z

EP 0 677 174 B1

Fig. 4 a)

Fig. 4 b)

**Fig. 5 a)**

**Fig. 5 b)**

**Fig. 5 c)**